(19) Europäisches Patentamt
European Patent Office
Office européen des brevets

(11) **EP 1 241 431 A1**

(12) **EUROPÄISCHE PATENTANMELDUNG**

(43) Veröffentlichungstag:
**18.09.2002 Patentblatt 2002/38**

(51) Int Cl.⁷: **F41G 7/22**

(21) Anmeldenummer: **02005151.2**

(22) Anmeldetag: **07.03.2002**

(84) Benannte Vertragsstaaten:
**AT BE CH CY DE DK ES FI FR GB GR IE IT LI LU
MC NL PT SE TR**
Benannte Erstreckungsstaaten:
**AL LT LV MK RO SI**

(30) Priorität: **16.03.2001 DE 10112692**

(71) Anmelder: **Bodenseewerk Gerätetechnik GmbH
88662 Überlingen (DE)**

(72) Erfinder: **Krogmann, Uwe
88662 Überlingen (DE)**

(74) Vertreter: **Weisse, Jürgen, Dipl.-Phys. et al
Weisse + Wolgast,
Bökenbusch 41
42555 Velbert (DE)**

(54) **Lenkstruktur für Flugkörper**

(57) Bei einer Lenkstruktur zum Lenken eines mit einem Sensorsystem versehenen Flugkörpers zu einem Ziel, wobei aus dem Sensorsystem ein Meßvektor ($\underline{z}$) von beobachtbaren Größen ableitbar ist, ist in dem Flugkörper ein Modell von Flugkörper-Ziel-Relativkinematik und Sensorsystem dargestellt. Das Modell ist durch ein Optimalfilter (44) modifizierbar ist, welches von der Abweichung eines sich aus dem Modell ergebenden Meßvektors ($\hat{\underline{z}}$) von dem realen Meßvektor ($\underline{z}$) beaufschlagt ist. Dabei wird durch die Modifikation eine Anpassung des Modells an die Realität angestrebt. Der Flugkörper ist in Abhängigkeit von einem in dem Modell erzeugten, die relative Kinematik von Flugkörper und Ziel darstellenden Relativkinematik-Vektor ($\hat{\underline{x}}_R$) lenkbar. Es sind Schätzermittel (50) zum Schätzen der Zielbeschleunigung mit einem entsprechend trainierten neuronalen Netz vorgesehen sind, auf welche der Meßvektor, Bilddaten von einem bildauflösenden Detektor (76) des Flugkörpers und Daten einer Trägheitsmeßeinheit (22) des Flugkörpers aufgeschaltet sind, und durch welche das Modell korrigierbar ist. Die Schätzermitte (50) enthalten Mittel (74) zur Merkmalsgewinnung, auf welche die Bilddaten von dem bildauflösenden Detektor (76) aufgeschaltet sind und welche durch Bildverarbeitung daraus eine begrenzte Anzahl von Merkmalsgrößen zur Charakterisierung des Zielbildes erzeugen. Die Merkmalsgrößen sind auf ein lernfähiges System (80) aufgeschaltet, das zur Erzeugung eines Schätzwertes für die Zielbeschleunigung ($a_T$) trainiert ist.

Fig. 3

EP 1 241 431 A1

**Beschreibung**

Die (nicht veröffentlichte) europäische Patentanmeldung 1 174 675A1 betrifft eine Lenkstruktur zum Lenken eines mit einem Sensorsystem versehenen Flugkörpers zu einem Ziel, wobei aus dem Sensorsystem ein Meßvektor von beobachtbaren Größen ableitbar ist.

Ein Flugkörper soll zu einem Ziel, z.B. einem zu zerstörenden gegnerischen Flugzeug geführt werden. Zu diesem Zweck weist der Flugkörper einen Suchkopf mit einem oder mehreren Sensoren auf. Die Sensoren erfassen ein Ziel. Aus den Signalen dieser Sensoren werden Lenksignale abgeleitet, welche den Flugkörper zu dem Ziel führen.

Bekannte Flugkörper weisen z.B. einen bildauflösenden Infrarotdetektor auf, der aus einer zweidimensionalen Anordnung von Detektorelementen besteht. Durch ein abbildendes optisches System wird eine das Ziel enthaltende Objektszene auf dem Infrarotdetektor abgebildet. Der Infrarotdetektor beobachtet somit ein Wärmebild, in welchem z.B. die heißen Triebwerke eines Flugzeugs und deren Abgasstrahl als intensive Strahlungsquelle erscheinen. Durch Bildverarbeitung wird aus dem von dem Infrarotdetektor gelieferten "elektronischen Bild" die Position des Ziels im Gesichtsfeld ermittelt. Bei bekannten Flugkörpern ist der Suchkopf im Raum stabilisiert und von den Bewegungen des Flugkörpers entkoppelt. Der Suchkopf kann aber auch mit dem Infrarotdetektor starr im Flugkörper sitzen, wobei durch ebenfalls starr mit der Zelle des Flugkörpers verbundene ("Strap-Down") Inertialsensoren die Entkopplung des elektronischen Bildes von der Bewegung des Flugkörpers erfolgt.

Üblicherweise wird der Suchkopf real oder virtuell dem Ziel nachgeführt. Aus dieser Nachführung wird die Sichliniendrehrate bestimmt. Die Lenkung erfolgt bei der "Proportionalnavigation" so, daß die Querbeschleunigung des Flugkörpers proportional dieser Sichtliniendrehrate ist.

Es gibt auch Flugkörper mit Radar- oder Lasersensor oder Sensoren, die in anderen Wellenlängenbereichen als Infrarot arbeiten. Es gibt auch Flugkörper mit mehr als einem Sensor. Man spricht dann von einem Sensorsystem.

Das Ziel, z.B. ein angegriffenes Flugzeug, hat üblicherweise ebenfalls Sensoren, welche den Angriff durch einen anfliegenden Flugkörper erkennen. Das Ziel trifft dann "Gegenmaßnahmen", die anstreben, den anfliegenden Flugkörper zu stören oder abzulenken. Insbesondere wird aber das angegriffene Flugzeug durch geeignete Manöver dem anfliegenden Flugkörper zu entkommen suchen.

Bei der Lenkung des Flugkörpers in das Ziel wird natürlich die Bewegung des Flugkörpers selbst durch eine inertiale Meßeinheit bestimmt und berücksichtigt. Die Bewegungsgrößen des Ziels sind dagegen unbekannt. Das zu erwartende Verhalten des Ziels, etwa ob das Ziel ein Fluchtmanöver ausführt und wie dieses Fluchtmanöver aussehen wird, "weiß" der Flugkörper nicht. Der Flugkörper erfaßt nur die Sichtlinie zum Ziel, ggf. Entfernung und Entfernungsänderung und reagiert auf deren Änderungen.

Der Erfindung des Hauptpatentes liegt die Aufgabe zu Grunde, die Trefferwahrscheinlichkeit bei Einsatz eines Flugkörpers gegen hochagile Ziele zu verbessern und insbesondere für die Lenkung des Flugkörpers die "Begegnungskinematik", also die Bewegungen von Flugkörper und Ziel heranzuziehen.

Nach dem Hauptpatent wird diese Aufgabe dadurch gelöst, daß in dem Flugkörper ein Modell von Flugkörper-Ziel-Relativkinematik und Sensorsystem dargestellt ist, das Modell durch Optimalfiltermittel modifizierbar ist, welche von der Abweichung eines sich aus dem Modell ergebenden Meßvektors von dem realen Meßvektor beaufschlagt sind, wobei durch die Modifikation eine Anpassung des Modells an die Realität angestrebt wird, und der Flugkörper in Abhängigkeit von einem in dem Modell erzeugten, die relative Kinematik von Flugkörper und Ziel darstellenden Relativkinematik-Vektor lenkbar ist.

Nach der Lehre des Hauptpatentes wird in einem flugkörperseitigen Rechner ein Modell sowohl des Flugkörpers und des Sensorsystems als auch des Ziels dargestellt. Das Sensorsystem liefert einen realen Meßvektor. Der Meßvektor ergibt sich aus der realen Relativkinematik von Flugkörper und Ziel. Der reale Meßvektor wird mit einem geschätzten Meßvektor verglichen, der sich aus dem Modell von Flugkörper, Ziel und Sensorsystem ergibt. Der reale und der geschätzte Meßvektor werden normalerweise nicht übereinstimmen, insbesondere da die Bewegungszustände des Ziels nicht bekannt sind. Deshalb wird ein Optimalfilter, z.B. ein Kalmanfilter, ein erweitertes Kalmanfilter oder die zustandsabhängige Riccatigleichung SDRE, von den Abweichungen des geschätzten Meßvektors vom realen Meßvektor beaufschlagt und modifiziert das Flugkörper-Ziel-Modell, also verändert dessen Parameter, in dem Sinne, diese Abweichung zu vermindern und die Meßvektoren einander anzugleichen. Das führt schließlich zu einem Modell, das nicht nur die Bewegungsparameter des Flugkörpers sondern auch die Bewegungsparameter des Ziels nachbildet. In diesem Modell gibt es einen Vektor der Relativkinematik. In Abhängigkeit von diesem Vektor erfolgt dann die Lenkung des Flugkörpers. Es läßt sich in der Simulation zeigen, daß damit auch bei hochagilen Zielen der Flugkörper trotz Fluchtmanövern mit erheblich verbesserter Trefferwahrscheinlichkeit zu dem Ziel geführt werden kann.

Um die Modellierung zu verbessern, schlägt das Hauptpatent weiterhin Schätzermittel zum Schätzen der Zielbeschleunigung vor, auf welche der Meßvektor, Bilddaten von einem bildauflösenden Detektor des Flugkörpers und Daten der Trägheitsmeßeinheit des Flugkörpers aufgeschaltet sind und durch welche das Modell korrigierbar ist. Das Hauptpatent schlägt weiterhin vor, daß die Schätzermittel ein entsprechend trainiertes neuronales Netz oder ein fuzzy-neuronales Netz sind.

Auf das neuronale oder fuzzy-neuronale Netz ist nach dem Hauptpatent somit einmal der Meßvektor $\underline{z}$ aufgeschaltet. Weiterhin erhält das oder fuzzy-neuronale Netz Bilddaten von einem Bildsensor oder bildauflösenden Detektor. Das neuronale oder fuzzy-neuronale Netz ist so trainiert, daß es aus diesen Eingangsgrößen Schätzwerte für die Querbeschleunigung des Ziels liefert. Das neuronale oder fuzzy-neuronale Netz nutzt z.B. die Tatsache aus, daß eine Querbeschleunigung eines das Ziel bildenden Flugzeugs mit einer Lageänderung des Flugzeugs im Raum und damit einer charakteristischen Änderung der Kontur, die vom Flugkörper aus "gesehen" wird, einhergeht. Aus einer sochen Konturänderung kann daher nach Erfahrungen -in Form von Lernprozessen des neuronalen oder fuzzy-neuronalen Netzes- auf Größe und Richtung der Querbeschleunigung geschlossen werden. Durch die Ausnutzung von Vorkenntnissen über das Ziel braucht das Optimalfilter weniger Rechenaufwand, um das Modell von Flugkörper und Ziel an die Realität anzupassen.

Die vorliegende Zusatzerfindung bezieht sich auf eine bevorzugte Ausbildung der Schätzermittel zum Schätzen der Zielbeschleunigung.

Die Zusatzerfindung betrifft eine Lenkstruktur zum Lenken eines mit einem Sensorsystem versehenen Flugkörpers zu einem Ziel, wobei aus dem Sensorsystem ein Meßvektor ($\underline{z}$) von beobachtbaren Größen ableitbar ist, bei welcher in dem Flugkörper ein Modell von Flugkörper-Ziel-Relativkinematik und Sensorsystem dargestellt ist, das Modell durch ein Optimalfilter modifizierbar ist, welches von der Abweichung eines sich aus dem Modell ergebenden Meßvektors ($\hat{\underline{z}}$) von dem realen Meßvektor ($\underline{z}$) beaufschlagt ist, wobei durch die Modifikation eine Anpassung des Modells an die Realität angestrebt wird, der Flugkörper in Abhängigkeit von einem in dem Modell erzeugten, die relative Kinematik von Flugkörper und Ziel darstellenden Relativkinematik-Vektor ($\hat{\underline{x}}_R$) lenkbar ist und Schätzermittel zum Schätzen der Zielbeschleunigung mit einem entsprechend trainierten neuronalen Netz vorgesehen sind, auf welche Bilddaten von einem bildauflösenden Detektor des Flugkörpers aufgeschaltet sind und durch welche das Modell korrigierbar ist, und sieht vor, daß

(a) die Schätzermitte Mittel zur Merkmalsgewinnung enthält, auf welche die Bilddaten von dem bildauflösenden Detektor aufgeschaltet sind und welche durch Bildverarbeitung daraus eine begrenzte Anzahl von Merkmalsgrößen zur Charakterisierung des Zielbildes erzeugen, und

(b) die Merkmalsgrößen auf ein lernfähiges System aufgeschaltet sind, das zur Erzeugung eines Schätzwertes für die Zielbeschleunigung ($a_T$) trainiert ist.

Eine Beschleunigung eines das Ziel bildenden Flugzeugs setzt zunächst eine Lageänderung des Flugzeugs im Raum voraus: Zum Steigen oder Sinken, also eine Vertikalbeschleunigung muß das Flugzeug den Anstellwinkel verändern, also die Lage seiner Längsachse im Raum. Eine Querbeschleunigung des Flugzeugs bedingt eine Schräglage und damit eine Veränderung des Aspektwinkels, unter dem das Flugzeug gesehen wird. Die Bildinformation, die unmittelbar von dem bildauflösenden Detektor geliefert wird, enthält eine sehr große, unübersichtliche Anzahl von Pixeln. Die Schätzermittel erzeugen in einem ersten Schritt durch Bildverarbeitung zunächst einmal eine begrenzte Anzahl von Merkmalsgrößen. Diese Merkmalsgrößen definieren z.B. die Längsachse des Bildes eines das Ziel bildenden Flugzeugs und die maximalen Abmessungen dieses Bildes längs und quer zu dieser Längsachse. Dadurch wird die sehr große Zahl von Bildinformationen von den Pixeln des bildauflösenden Detektors zunächst durch Bildverarbeitung auf einige wesentliche Merkmalsgrößen reduziert. Diese Merkmalsgrößen sind dann auf ein lernfähiges System wie ein neuronales oder fuzzy-neuronales Netz geschaltet. Dieses lernfähige System ist dann darauf trainiert, aus den Merkmalsgrößen Schätzwerte für die Querbeschleunigung $a_T$ des Ziels zu erzeugen.

Auf die Mittel zur Merkmalsgewinnung ist vorzugsweise zusätzlich der Meßvektor des Sensorsystems aufgeschaltet. Dieser liefert z.B. Entfernungsinformationen oder oder Informationen über die Sichtlinienendrehrate und erleichtern die Auswertung der Bildinformation von dem bildauflösenden Detektor.

Eine weitere vorteilhafte Ausgestaltung der Erfindung besteht darin, daß das Optimalfilter zur Schätzung des Relativkinematik-Vektors ohne Berücksichtigung der Zielbeschleunigung ausgelegt ist und die Differenz des Schätzwertes des geschätzten Meßvektors ($\hat{\underline{z}}$) aus dem durch das Optimalfilter modifizierten Modell und dem realen Meßvektor ($\underline{z}$) zusätzlich auf das lernfähige System aufgeschaltet und beim Trainieren dieses Systems berücksichtigt ist.

Dadurch, daß die Zielbeschleunigung nicht bei der Modifikation des Modells durch das Optimalfilter berücksichtigt wird, ergibt sich eine erhebliche Verringerung des Rechenaufwandes. Die Anpassung des Modells an die reale Welt erfolgt schneller. Wenn aber eine Zielbeschleunigung auftritt, dann tritt eine ansteigende Abweichung zwischen dem berechneten und dem realen Meßvektor auf. Diese Abweichung liefert daher ein Anzeichen für das Auftreten einer Zielbeschleunigung. Diese Abweichung wird daher als weitere Eingangsgröße auf das lernfähige System aufgeschaltet.

Ein Ausführungsbeispiel der Erfindung ist nachstehend unter Bezugnahme auf die zugehörigen Zeichnungen näher erläutert.

Fig.1 ist ein Blockdiagramm einer Lenkstruktur zum Lenken eines mit einem Sensorsystem und einem bildauflösenden Detektor versehenen Flugkörpers zu einem Ziel, wobei die Anpassung des Modells der Begegnungssituation an die reale Welt durch ein Optimalfilter erfolgt, wobei aber zusätzlich eine Schätzung der Zielbeschleunigung und Berücksichtigung des so erhaltenen Schätzwertes erfolgt.

Fig.2    veranschaulicht die Relativkinematik von Flugkörper und Ziel.

Fig.3    ist ein Blockdiagramm und zeigt das Optimalfilter und die Mittel zum Schätzen der Zielbeschleunigung aus den Bildinformationen eines das Ziel beobachtenden bildauflösenden Detektors.

Fig.4    ist ein Blockdiagramm und veranschaulicht in einer anderen Darstellung die Mittel zum Schätzen der Zielbeschleunigung.

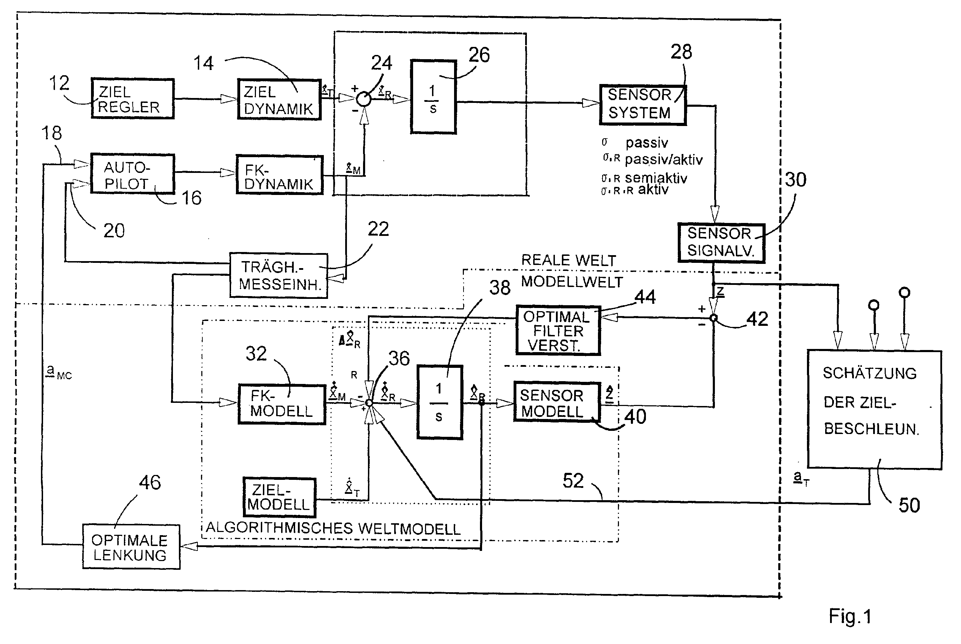

In Fig.1 ist als Blockdiagramm oberhalb einer strickpunktierten Linie 10 die reale Welt dargestellt. Block 12 bezeichnet den Flugregler des Ziels, eines anzugreifenden gegnerischen Flugzeuges. Die Zieldynamik 14 liefert die Änderung eines Zustandsvektors $\dot{\underline{x}}_T$ des Zieles. Ein Block 16 stellt den Autopiloten eines Flugkörpers dar. Der Autopilot 16 erhält an einem Eingang 18 in noch zu beschreibender Weise eine kommandierte Querbeschleunigung $\underline{a}_{MC}$. An einem Eingang 20 erhält der Autopilot 16 Signale von einer Trägheitsmeßeinheit ("IMU"). Aus der Flugkörperdynamik ergibt sich die Änderung $\dot{\underline{x}}_M$ des Zustandsvektors des Flugkörpers. Diese Änderung $\dot{\underline{x}}_M$ des Zustandsvektors des Flugkörpers beaufschlagt die Trägheitsmeßeinheit 22 des Flugkörpers.

Aus den Änderungen der Zustandsvektoren $\dot{\underline{x}}_T$ und $\dot{\underline{x}}_M$ von Ziel und Flugkörper ergibt sich eine Änderung der Relativkinematik, die durch einen Vektor $\dot{\underline{x}}_R$ dargestellt ist. Das ist in Fig.1 schematisch durch einen Summierpunkt 24 dargestellt. Tatsächlich ist der Vektor $\dot{\underline{x}}_R$ nicht einfach die Differenz der Zustandsvektoren $\dot{\underline{x}}_T$ und $\dot{\underline{x}}_M$, sondern es ist generell $\dot{\underline{x}}_R = f(\dot{\underline{x}}_T, \dot{\underline{x}}_M)$ plus Rauschen.

Der Vektor $\dot{\underline{x}}_R$ der Änderung der Relativkinematik wird integriert, was durch Block 26 dargestellt ist. Das Liefert den Vektor $\underline{x}_R$. In Block 26 ist "s" die Variable der Laplace-Transformation. Die durch Vektor $\underline{x}_R$ gekennzeichnete Relativkinematik wird durch Sensoren, die ein Sensorsystem 28 bilden, erfaßt. Diese Sensoren können passive Sensoren wie bildauflösende Infrarotsensoren sein, oder aktive Sensoren wie Radar- oder Lasersensoren. Das Sensorsystem liefert z.B. Signale nach Maßgabe der Sichtlinie σ, der Sichtliniendrehrate $\dot{\sigma}$, des Abstands R zwischen Flugkörper und Ziel und dessen Änderung $\dot{R}$. Diese Signale werden einer Signalverarbeitung 30 unterworfen und liefern einen realen Meßvektor $\underline{z}$.

Der Flugkörper enthält nun in einem Rechner ein Modell 31 der vorstehend geschilderten realen Welt. Im vorliegenden Fall ist dies ein algorithmisch dargestelltes Modell. Dieses Modell 31 ist in Fig. 1 durch eine gestrichelte Linie umrandet. Dieses Modell umfaßt ein Modell 32 des Flugkörpers und ein Modell 34 des Ziels. Auf das Modell 32 des Flugkörpers sind die Signale der (realen) Trägheitsmeßeinheit 22 aufgeschaltet. Das Modell 32 des Flugkörpers liefert einen Schätzwert $\dot{\hat{\underline{x}}}_M$ der Änderung des Zustandsvektors des Flugkörpers. Das Modell 34 des Ziels liefert einen Schätzwert $\dot{\hat{\underline{x}}}_T$ der Änderung des Zustandsvektors des Ziels. Aus den beiden Vektoren $\dot{\hat{\underline{x}}}_M$ und $\dot{\hat{\underline{x}}}_T$ ergibt sich ein Vektor $\dot{\hat{\underline{x}}}_R$ der im Modell als Schätzwert die Änderung der Relativkinematik zwischen Flugkörper und Ziel darstellt. In Fig. 1 ist dies wieder symbolisch als ein Summierpunkt 36 dargestellt, obwohl der Vektor $\dot{\hat{\underline{x}}}_R$ nicht einfach die Differenz der Änderungen der Zustandsvektoren ist. Auch hier ist allgemein $\dot{\hat{\underline{x}}}_R = (\dot{\hat{\underline{x}}}_M, \dot{\hat{\underline{x}}}_T)$ plus Rauschen. Der Vektor $\dot{\hat{\underline{x}}}_A$ wird integriert, wie durch Block 38 dargestellt ist. Das ergibt einen Schätzwert $\hat{\underline{x}}_R$ des Vektors der Relativkinematik. Dieser Schätzwert $\hat{\underline{x}}_R$ ist auf ein Sensormodell 40 aufgeschaltet. Das Sensormodell 40 ist ein Modell der Sensoren und der zugehörigen Signalverarbeitung. Das Sensormodell 40 liefert einen Schätzwert $\hat{\underline{z}}$ des Meßvektors.

Da das Modell im allgemeinen zunächst nicht mit der Realität übereinstimmt, insbesondere weil das Verhalten des Ziels unbekannt ist, wird der Schätzwert $\hat{\underline{z}}$ des Meßvektors zunächst nicht mit dem realen Meßvektor zübereinstimmen. In einem Summierpunkt 42 wird die Differenz der beiden Meßvektoren $\underline{z}$ und $\hat{\underline{z}}$ gebildet. Diese Differenz wird auf ein Optimalfilter 44 geschaltet. Dieses Optimalfilter 44 kann z.B. ein Kalmanfilter, ein erweitertes Kalmanfilter oder eine Lösung der zustandsabhängigen Riccatigleichung (SDRE) sein. Durch das Optimalfilter 44 werden die Parameter des Modells modifiziert im Sinne einer Anpassung des Modells 31 an die Realität. Das ist in Fig. 1 symbolisch dargestellt durch die Aufschaltung eines Vektors $\Delta \dot{\hat{\underline{x}}}_R$ von dem Optimalfilter 44 auf den Summierpunkt 36. Damit wird der Vektor $\dot{\hat{\underline{x}}}_R$ korrigiert, was nach Integration zu einem korrigierten Relativkinematik-Vektor $\hat{\underline{x}}_R$ führt. Dadurch wird der Schätzwert $\hat{\underline{z}}$ des Meßvektors an den realen Meßvektor $\underline{z}$ angeglichen.

Der sich so aus dem Modell ergebende Relativkinematik-Vektor $\hat{\underline{x}}_R$ ist nun auf einen optimalen Lenkregler 46 aufgeschaltet, der eine kommandierte Querbeschleunigung $\underline{a}_{MC}$ auf den Autopiloten des Flugkörpers aufschaltet.

Das Optimalfilter ist so ausgelegt, daß es die Zielbeschleunigung $\underline{a}_T$ nicht durch entsprechende Modifikation des Modells berücksichtigt. Dafür enthält die Lenkstruktur zusätzlich ein wissensbasiertes Schätzelement 50 zum Schätzen der Zielbeschleunigung. Auf dieses Schätzelement 50 ist einmal der Meßvektor $\underline{z}$ aufgeschaltet. Weiterhin erhält das Schätzelement 50 Bilddaten von einem Bildsensor oder bildauflösenden Detektor. Schließlich sind auch die Signale der Trägheitsmeßeinheit auf das Schätzelement 50 aufgeschaltet und berücksichtigen die Eigenbewegung des Flugkörpers. Das Schätzelement 50 liefern aus diesen Eingangsgrößen Schätzwerte für die Querbeschleunigung des Ziels liefert.

Die auf diese Weise gewonnene Kenntnis über das Ziel wird bei der Modellierung des Ziels berücksichtigt. Das ist in Fig.1 dadurch symbolisch dargestellt, daß die Beschleunigung $a_T$ des Ziels über eine Schleife 52 zusätzlich auf den "Summierpunkt" 36 aufgeschaltet ist.

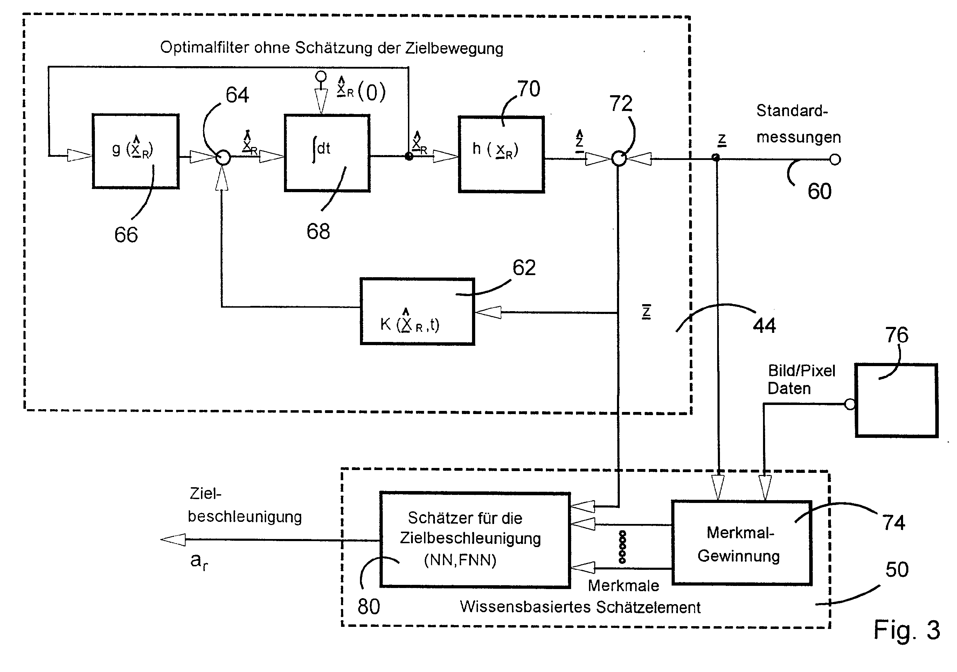

Fig.3 zeigt im einzelnen das Schätzelement 50 und das Optimalfilter von Fig.1. An einem "Eingang" 60 liegen die gemessenen Daten des Meßvektors $\underline{z}$. Bei einem kombinierten Radar- oder Ladar- und Infrarotsucher ist beispielsweise

$$\underline{z} = \left[\sigma, \dot{\sigma}, R\right],$$

Wobei σ der Sichtlinienwinkel und R der Zielabstand ist. Das Optimalfilter liefert aus dem Modell einen Schätzwert $\hat{\underline{z}}$ des Meßvektors. Die Differenz (Residuum)

$$\tilde{\underline{z}} = \hat{\underline{z}} - \underline{z}$$

ist über einen Verstärker 62 mit den Faktoren $K(\hat{\underline{x}}_R, t)$ auf den Summierpunkt 64 aufgeschaltet. Eine durch einen Block dargestellte Funktion $g(\underline{x}_R)$ eines Schätzwertes $\underline{x}_R$ des Zustandsvektors der Relativkinematik von Flugkörper und Ziel ist ebenfalls auf den Summierpunkt 64 aufgeschaltet. Dabei ist der Zustandsvektor $\underline{x}_R$ beispielsweise durch folgende Elemente definiert:

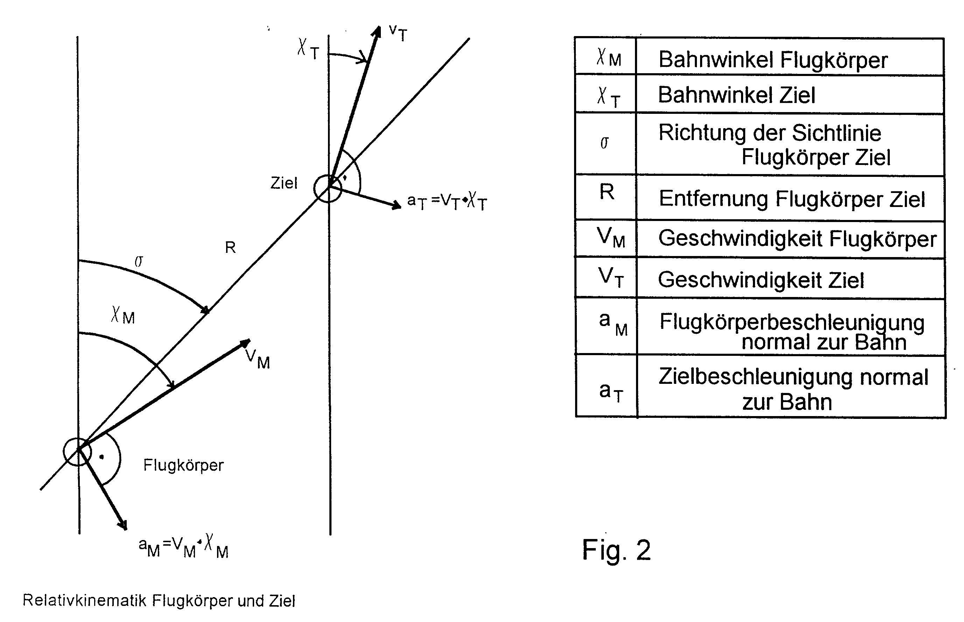

$$\underline{x}_R = \left[\dot{\sigma}, \sigma\, R, \chi_T, \chi_M, V_M\right]^T \text{ (Fig.2)}.$$

Die Funktion $g(\hat{\underline{x}}_R)$ wird durch das mit den Faktoren $K(\underline{x}_R, t)$ multiplizierte Residuum korrigiert. Das liefert einen Schätzwert $\dot{\underline{x}}_R$ für die Zeitableitung des Zustandsvektors der Relativkinematik von Flugkörper und Ziel. Durch Integration, dargestellt durch einen Block 68 ergibt sich der Schätzwert des Zustandsvektors der Relativkinematik $\hat{\underline{x}}_R$. Eine Funktion $h(\underline{x}_R)$ dieses Schätzwertes, dargestellt durch Block 70, welche das Sensormodell darstellt, liefert den Schätzwert $\hat{\underline{z}}$ des Meßvektors. In einem Summierpunkt 72 wird die Differenz des Schätzewertes $\hat{\underline{z}}$ und des realen Meßvektors gebildet. Das ist der Aufbau eines Kalmanfilters. Normalerweise ist die Funktion g auch noch abhängig von einem Eingangsgrößenvektor der Relativkinematik mit der Zielbeschleunigung $a_T$:

$$u = [a_T, V_T, a_M, \dot{V}_M]^T.$$

Die Zielbeschleunigung $a_T$ würde dann von dem Optimalfilter mit berechnet, was einen erheblichen Rechenaufwand bedingen würde. Das Optimalfilter ist nun bewußt so ausgelegt, daß die Zielbeschleunigung $a_T$ nicht berücksichtigt wird. Das führt zu einem Anwachsen des Residuums $\tilde{\underline{z}}$. Das Anwachsen des Residuums $\tilde{\underline{z}}$ ist daher ein Anzeichen und Maß für das Auftreten einer Zielbeschleunigung $a_T$.

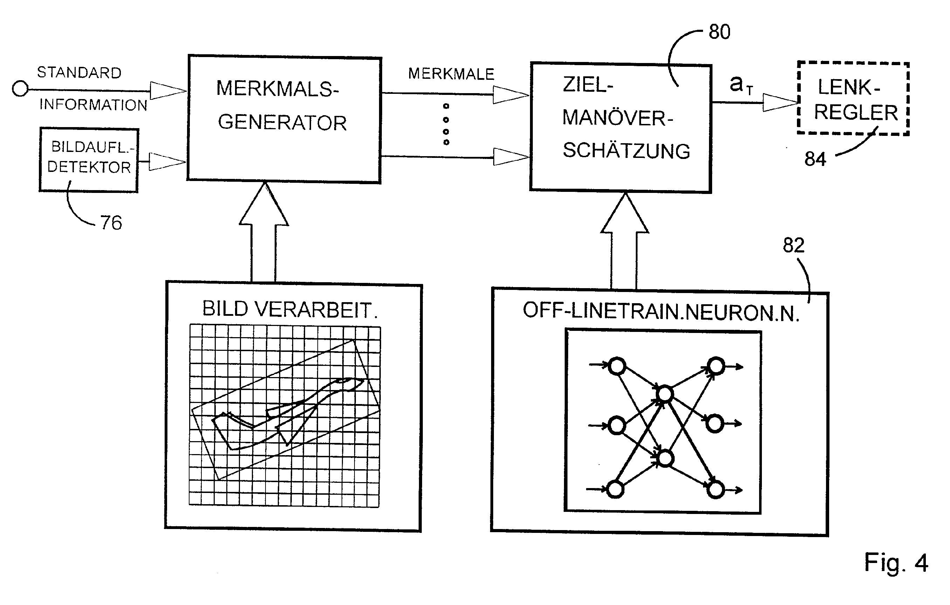

In Fig.3 enthält nun das Schätzelement einen Merkmalsgenerator 74. Der Merkmalsgenerator 74 nimmt vor allem eine Bildverarbeitung der von einem bildauflösenden Detektor 76 gelieferten Bilddaten vor. Das ist durch Block 78 in Fig.4 angedeutet. Außerdem erhält der Merkmalsgenerator die Standardmeßdaten die in dem Meßvektor $\underline{z}$ zusammengefaßt sind. Der Merkmalsgenerator 74 liefert durch die Bildverarbeitung aus der großen Anzahl von Bilddaten (Pixeln) eine begrenzte Anzahl von Merkmalen, welche die beobachtete Kontur des Ziels, hier eines Flugzeugs, charakterisieren. Das sind beispielsweise die Richtung der Flugzeuglängsachse und die maximalen Abmessungen des Bildes des Flugzeugs in Richtung der Flugzeuglängsachse und senkrecht dazu. Eine Lageänderung der Flugzeuglängsachse in dem Bild zeigt eine Änderung des Anstellwinkels des Flugzeugs an, die zu einer Querbeschleunigung des Flugzeugs in vertikaler Richtung führt. Eine Änderung der maximalen Abmessungen quer zur Längsachse deutet auf eine Rollbewegung des Flugzeugs und damit eine seitliche Querbeschleunigung hin. Die so erhaltenen Merkmale sind quantitative Merkmalsgrößen. Diese Merkmalsgrößen sind auf einen Schätzer 80 (Fig.3) aufgeschaltet. Der Schätzer 80 ist ein neuronales oder fuzzy-neuronales Netz, wie in Fig.4 durch Block 82 dargestellt ist. Ebenfalls auf den Schätzer 80 aufgeschaltet ist das Residuum $\tilde{\underline{z}}$ des Optimalfilters 44. Das neuronale oder fuzzy-neuronale Netz des Schätzers 82 ist off-line an Hand von Beispielen so trainiert, daß es aus den Merkmalsgrößen von dem Merkmalsgenerator 74 und dem Residuum $\tilde{\underline{z}}$ einen Schätzwert für die Zielbeschleunigung $\underline{a}_T$ liefert. Dieser Schätzwert $\underline{a}_T$ ist, wie in Fig. 1 dargestellt ist, auf das Modell der Relativkinematik als Meßgröße aufgeschaltet. Der Schätzwert für die Zielbeschleunigung $\underline{a}_T$ erscheint somit hier wie eine Meßgröße, die im wesentlichen aus der Bildverarbeitung des Bildes vom bildauflösenden Detektor 76 erhalten wird und braucht nicht durch das Optimalfilter 44 berechnet zu werden. Damit wird der Rechenaufwand des Optimalfilters 44 wesentlich reduziert.

**Patentansprüche**

1. Lenkstruktur zum Lenken eines mit einem Sensorsystem versehenen Flugkörpers zu einem Ziel, wobei aus dem Sensorsystem ein Meßvektor ($\underline{z}$) von beobachtbaren Größen ableitbar ist, bei welcher in dem Flugkörper ein Modell von Flugkörper-Ziel-Relativkinematik und Sensorsystem dargestellt ist, das Modell durch ein Optimalfilter modifizierbar ist, welches von der Abweichung eines sich aus dem Modell ergebenden Meßvektors ($\underline{\hat{z}}$) von dem realen Meßvektor ($\underline{z}$) beaufschlagt ist, wobei durch die Modifikation eine Anpassung des Modells an die Realität angestrebt wird, der Flugkörper in Abhängigkeit von einem in dem Modell erzeugten, die relative Kinematik von Flugkörper und Ziel darstellenden Relativkinematik-Vektor ($\underline{\hat{x}}_R$) lenkbar ist und Schätzermittel zum Schätzen der Zielbeschleunigung mit einem entsprechend trainierten neuronalen Netz vorgesehen sind, auf welche Bilddaten von einem bildauflösenden Detektor des Flugkörpers aufgeschaltet sind und durch welche das Modell korrigierbar ist, nach Anspruch 4 und 6 des Patentes ... (Patentanmeldung 100 33 368.0), **dadurch gekennzeichnet, daß**

    (a) die Schätzermitte (50) Mittel (74) zur Merkmalsgewinnung enthalten, auf welche die Bilddaten von dem bildauflösenden Detektor (76) aufgeschaltet sind und welche durch Bildverarbeitung daraus eine begrenzte Anzahl von Merkmalsgrößen zur Charakterisierung des Zielbildes erzeugen, und

    (b) die Merkmalsgrößen auf ein lernfähiges System (80) aufgeschaltet sind, das zur Erzeugung eines Schätzwertes für die Zielbeschleunigung ($a_T$) trainiert ist.

**2.** Lenkstruktur nach Anspruch 1, **dadurch gekennzeichnet, daß** auf die Mittel zur Merkmalsgewinnung zusätzlich der Meßvektor ($\underline{z}$) des Sensorsystems (28) aufgeschaltet ist.

**3.** Lenkstruktur nach Anspruch 1 oder 2, **dadurch gekennzeichnet, daß** das lernfähige System (80) ein neuronales Netz ist.

**4.** Lenkstruktur nach Anspruch 1 oder 2, **dadurch gekennzeichnet, daß** das lernfähige System (80) ein fuzzy-neuronales Netz ist.

**5.** Lenkstruktur nach einem der Ansprüche 1 bis 4, **dadurch gekennzeichnet, daß**

    (a) das Optimalfilter (44) zur Schätzung des Relativkinematik-Vektors ohne Berücksichtigung der Zielbeschleunigung ausgelegt ausgelegt ist und

    (b) die Differenz des Schätzwertes des geschätzten Meßvektors ($\underline{\hat{z}}$) aus dem durch das Optimalfilter (44) modifizierten Modell und dem realen Meßvektor ($\underline{z}$) zusätzlich auf das lernfähige System (80) aufgeschaltet und beim Trainieren dieses Systems (80) berücksichtigt ist.

Fig.1

Relativkinematik Flugkörper und Ziel

| | |
|---|---|
| $\chi_M$ | Bahnwinkel Flugkörper |
| $\chi_T$ | Bahnwinkel Ziel |
| $\sigma$ | Richtung der Sichtlinie Flugkörper Ziel |
| R | Entfernung Flugkörper Ziel |
| $V_M$ | Geschwindigkeit Flugkörper |
| $V_T$ | Geschwindigkeit Ziel |
| $a_M$ | Flugkörperbeschleunigung normal zur Bahn |
| $a_T$ | Zielbeschleunigung normal zur Bahn |

Fig. 2

EP 1 241 431 A1

Fig. 3

Optimalfilter ohne Schätzung der Zielbewegung

$g(\hat{\underline{x}}_R)$  66

64

$\hat{\underline{x}}_R(0)$

$\int dt$  68

70  $h(\hat{\underline{x}}_R)$

72

$\underline{z}$  Standard-messungen  60

$K(\hat{\underline{x}}_R,t)$  62

44

76  Bild/Pixel Daten

Ziel-beschleunigung  $a_r$

Schätzer für die Zielbeschleunigung (NN,FNN)  80

Merkmal-Gewinnung  74

Merkmale

Wissensbasiertes Schätzelement  50

EP 1 241 431 A1

EP 1 241 431 A1

Fig. 4

**Europäisches Patentamt**

## EUROPÄISCHER RECHERCHENBERICHT

Nummer der Anmeldung

EP 02 00 5151

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| A | DE 42 18 600 A (BODENSEEWERK GERAETETECH) 9. Dezember 1993 (1993-12-09) * Seite 3, Zeile 14 - Seite 7, Zeile 14; Abbildungen 1-12 * * Zusammenfassung * --- | 1-5 | F41G7/22 |
| A | US 5 253 823 A (LAWRENCE RICHARD V) 19. Oktober 1993 (1993-10-19) * Spalte 2, Zeile 32 - Spalte 12, Zeile 24; Abbildungen 1-4 * * Zusammenfassung * --- | 1,2,5 | |
| A,P, D | EP 1 174 675 A (BODENSEEWERK GERAETETECH) 23. Januar 2002 (2002-01-23) * das ganze Dokument * ----- | 1-5 | |

| | | | RECHERCHIERTE SACHGEBIETE (Int.Cl.7) |
|---|---|---|---|
| | | | F41G |

Der vorliegende Recherchenbericht wurde für alle Patentansprüche erstellt

| Recherchenort | Abschlußdatum der Recherche | Prüfer |
|---|---|---|
| DEN HAAG | 14. Mai 2002 | Blondel, F |

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 02 00 5151

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

14-05-2002

| Im Recherchenbericht angeführtes Patentdokument | Datum der Veröffentlichung | Mitglied(er) der Patentfamilie | Datum der Veröffentlichung |
|---|---|---|---|
| DE 4218600 A | 09-12-1993 | DE 4218600 A1 | 09-12-1993 |
| US 5253823 A | 19-10-1993 | DE 3436839 A1<br>GB 2261133 A ,B | 08-07-1993<br>05-05-1993 |
| EP 1174675 A | 23-01-2002 | DE 10033368 A1<br>EP 1174675 A1 | 17-01-2002<br>23-01-2002 |

EPO FORM P0461

Für nähere Einzelheiten zu diesem Anhang : siehe Amtsblatt des Europäischen Patentamts, Nr.12/82